# EUROPÄISCHE PATENTANMELDUNG

(11) **EP 1 146 070 A2**
(43) Veröffentlichungstag der Anmeldung: **17.10.2001**
(21) Anmeldenummer: 01107108.1
(22) Anmeldetag: 22.03.2001
(51) Int. Cl.: C08J 9/36, C08L 61/28

(54) **Melaminharz-Schaumstoff**

(30) Priorität: 15.04.2000 DE 10018768
(71) Anmelder: BASF AKTIENGESELLSCHAFT, 67056 Ludwigshafen (DE)
(72) Erfinder: Thom, Arnd, 55232 Alzey (DE)

(57) **Zusammenfassung**

Die Erfindung betrifft offenzellige Melaminharz-Schaumstoffe mit verbesserten Brandeigenschaften, deren Zellgerüst ganz oder teilweise mit einem Ammoniumsalz beschichtet ist.

## Beschreibung

Die Erfindung betrifft einen offenzelligen Melaminharz-Schaumstoff (MF-Schaumstoff) mit verbesserten Brandeigenschaften.

MF-Schaumstoffe zeichnen sich durch geringes spezifisches Gewicht, gute mechanische Bearbeitbarkeit und vor allem durch hervorragende Schallabsorption aus. Ein entsprechendes Handelsprodukt ist BASOTECT® der BASF Aktiengesellschaft. Es wird in zunehmendem Maße im Baubereich, daneben aber auch für Fahrzeuginnenteile eingesetzt.

Aufgrund ihrer chemischen Zusammensetzung besitzen MF-Schaumstoffe günstige Brandeigenschaften, sie erreichen z.B. die Brandklasse B1 nach DIN 4102. Neuerdings werden insbesondere in den skandinavischen Ländern strengere Anforderungen an die Brandeigenschaften von Schaumstoffen im Baubereich gestellt.
So erreichen die bekannten MF-Schaumstoffe beispielsweise nicht die Brandklasse A nach dem Nordtest Method NT fire 004. Der Erfindung lag daher die Aufgabe zugrunde, die Brandeigenschaften von MF-Schaumstoffen weiter zu verbessern.

Diese Aufgabe wird erfindungsgemäß dadurch gelöst, daß die Oberfläche des Zellgerüsts von MF-Schaumstoffen ganz oder teilweise mit einem Ammoniumsalz beschichtet ist, vorzugsweise mit 0,1 bis 20 Gew.-%, insbesondere mit 1 bis 10 Gew.-%. Um eine ausreichende Brandresistenz zu haben, sollte das Ammoniumsalz mindestens 1 mm, vorzugsweise 2 bis 20 mm, tief in den Schaumstoff eingedrungen sein.

Bevorzugte Brandschutzmittel sind die Salze der Phosphorsäure, insbesondere Ammoniumorthophosphat und Ammoniumpolyphosphat. Das Ammoniumsalz kommt als wäßrige, vorzugsweise 1 bis 50 gew.-%ige, insbesondere 5 bis 30 gew.-%ige, Lösung zur Anwendung.

MF-Schaumstoffe sind an sich bekannt, z.B. aus EP-B 71 672. Sie werden nach EP-B 17 671 hergestellt durch Verschäumen einer wäßrigen Lösung eines MF-Kondensationsprodukts, welche einen Emulgator, ein saures Härtungsmittel und ein Treibmittel, vorzugsweise einen C₅-C₇-Kohlenwasserstoff, enthält, und Aushärten des MF-Kondensats bei erhöhter Temperatur. Diese Schaumstoffe werden nun erfindungsgemäß mit einer wäßrigen Lösung des Ammoniumsalzes bestrichen, eingesprüht oder getränkt, überschüssige Flüssigkeit wird ggf. abgequetscht und der Schaumstoff wird getrocknet.

Dies kann bei erhöhter Temperatur durch Heißluft oder Umluft oder in Trockenöfen, ferner durch Behandlung mit Mikrowellen oder Infrarotstrahlen geschehen, vorzugsweise aber durch einfaches mehrstündiges Lagern an der Luft bei Raumtemperatur.

Bei größeren Formteilen ist es zweckmäßig, die gesamte Oberfläche mit der Ammoniumsalzlösung zu behandeln, wobei die Eindringtiefe der Lösung mindestens 1 mm betragen solle; kleinere Formteile können vollständig in die Lösung eingetaucht werden. Bei Platten genügt es in vielen Fällen, wenn sie nur einseitig mit der Ammoniumsalzlösung bestrichen oder besprüht werden. Die aufzutragenden Mengen liegen dann vorzugsweise im Bereich von 20 bis 200 g einer 20 gew.-%igen Lösung pro m² der Oberfläche.

Durch die erfindungsgemäße Beschichtung mit dem Ammoniumsalz werden die guten Eigenschaften des MF-Schaums, wie mechanische Bearbeitbarkeit und die Schallabsorption, nicht beeinträchtigt, die Brandeigenschaften werden jedoch erheblich verbessert.

Neben der Anwendung im Baubereich und bei Automobilinnenteilen können die erfindungsgemäßen Schaumstoffe auch im Schiffsbau bei der Isolierung von Maschinenräumen eingesetzt werden, wo sie die Marine-Norm IMO A. 635 erfüllen.

### Beispiel

Eine MF-Schaumstoffplatte mit den Abmessungen 23x23x1 cm und der Dichte 0,01 g/cm³ (BASOTECT 2011) wurde einseitig mit einer 20 gew.-%igen Lösung von Ammoniumorthophosphat besprüht. Die Auftragsmenge betrug etwa 50 g Lösung pro m². Die Platte wurde über Nacht an der Luft getrocknet. Sie enthielt dann etwa 0,5 g, d.h. 10 Gew.-%, Ammoniumsalz. Im Brandtest NT fire 004 wurde die Brandklasse A erreicht.

## Patentansprüche

1. Offenzelliger Melaminharz-Schaumstoff (MF-Schaumstoff), **dadurch gekennzeichnet, daß** die Oberfläche seines Zellgerüsts ganz oder teilweise mit einem Ammoniumsalz beschichtet ist.

2. MF-Schaumstoff nach Anspruch 1, **dadurch gekennzeichnet, daß** der Gehalt an Ammoniumsalz 0,1 bis 20 Gew.-% beträgt.

3. MF-Schaumstoff nach Anspruch 1, **dadurch gekennzeichnet, daß** die Eindringtiefe des Ammoniumsalzes in die Oberfläche des Schaumstoffs mindestens 1 mm beträgt.

4. MF-Schaumstoff nach Anspruch 1, **dadurch gekennzeichnet, daß** das Ammoniumsalz ein Salz der Phosphorsäure, insbesondere Ammoniumphosphat oder Ammoniumpolyphosphat, ist.

5. Verfahren zur Herstellung des MF-Schaumstoff nach Anspruch 1, **dadurch gekennzeichnet, daß** man den Schaumstoff mit einer wäßrigen Lösung des Ammoniumsalzes bestreicht, einsprüht oder tränkt, überschüssige Flüssigkeit ggf. abquetscht und den Schaumstoff trocknet.

6. Verfahren nach Anspruch 5, **dadurch gekennzeichnet, daß** die Lösung 1 bei 50 gew.-%ig ist.

7. Offenzelliger MF-Schaumstoff, **dadurch gekennzeichnet, daß** er im Brandtest NT fire 004 die Brandklasse A erreicht.
